# EUROPEAN PATENT SPECIFICATION

(11) **EP 0 437 031 B1**
(45) Date of publication and mention of the grant of the patent: **09.08.1995**
(21) Application number: 90312360.2
(22) Date of filing: 13.11.1990
(51) Int. Cl.: A61C 8/00

(54) **Dental implant system**
Zahnimplantatsystem
Système d'implant dentaire

(30) Priority: 14.11.1989 US 436432
(43) Date of publication of application: 17.07.1991
(73) Proprietor: Zuest, Max, Escondido, California 92025 (US)
(72) Inventor: Zuest, Max, Escondido, California 92025 (US)
(74) Representative: Wilson, Nicholas Martin

(56) References cited:
- EP-A- 0 305 075
- FR-A- 2 596 273
- US-A- 4 359 318
- US-A- 4 856 994

## Description

### BACKGROUND OF THE INVENTION

The present invention relates to a dental implant system

Dental implants are embedded in the jaw bone and serve to anchor one or more artificial teeth or dentures. Most implant systems involve a relatively long implant cylinder which is placed into a custom bored hole in the jawbone, then left for several months to allow healing and bone integration. Then the implant must be exposed for attachment of a dental prosthetic appliance such as a crown, denture, partial denture or bridge. This generally involves the dentist cutting out a flap of tissue which is peeled back to expose the implant, and secured by sutures after installing the prosthesis. This results in a relatively large area of trauma with a certain degree of pain to the patient and risk of post-operative infection.

Another problem with conventional implants is their length, which makes them difficult to implant in the distal jaw region, where there is insufficient depth to enable their insertion without interference with the mandibular nerve, without the assistance of a dental surgeon to locate the precise position of the nerve and ensure that the implant does not interfere with it. A shorter cylindrical implant would not normally be suitable since it would provide insufficient "hold" and would likely become loosened with time if anchored to a denture or bridge. Also, side to side forces on the implant lead to bone erosion and trauma. Thus, dentures or bridges are often not anchored at the rear of the jaw. However, this has the disadvantage that trauma to the tissue and underlying bone beneath the denture occurs as a result of the denture repeatedly impacting the bone, particularly with long dentures which will tend to tilt or rotate about their attachment or anchor points during chewing or other jaw motions. This biting pressure can result in bone erosion or resorption down to the level of the nerve.

Examples of such implants are shown in US-A-4856994 which forms the preamble of claim 1 and FR-A-2596273. Both of those documents disclose relatively elongate implants to which dentures are fixedly mounted. As mentioned above, such implants are subject to lateral pressures which can cause bone erosion.

### SUMMARY OF THE INVENTION

It is an object of this invention to provide an improved dental implant system which is less likely to cause significant tissue trauma and which reduces bone erosion as a result of denture wear.

According to the present invention, a dental implant assembly is provided which comprises:
implant means for embedding in the jawbone, the implant means including a first part for projecting into and osseointegrating with the jawbone and a second part for projecting up to just above the tissue level characterized in that:
the implant assembly is for embedding in the distal region of the jawbone to the rear of the first bicuspid and is arranged to support a distal end of the denture anchored elsewhere in the jaw;
the first part has a height no greater than 4.5mm; and,
the second part has an upper rest surface having a shaped, cooperating area for non-retentive seating engagement with a correspondingly shaped mating surface on an overlying denture anchored elsewhere in the jaw, whereby the second part can resist biting pressure on the tissue and the jaw while allowing lateral movement of the denture.

The second part accepts downward pressure only and thereby acts to restrict bone erosion.

The first part preferably comprises an implant member and the second part preferably comprises a rest factor releasably securable to the implant member.

The first part may have a height no greater than its diameter. The first part preferably has a height of between 2-4.5mm.

In a preferred embodiment, the first part comprises a thin disc-shaped member having a downwardly projecting annular rim. The disc-shaped member preferably includes a central spigot projecting downwardly therefrom.

A bore of corresponding shape to the central spigot of the implant member is preferably drilled out in the jawbone at the implant site so that when the implant member is positioned in the bore, the peripheral rim will provide stabilization of the member against lateral movement during the osseointegration period. The shape of the undersurface of the implant provides a large area of bone-to-implant contact for osseointegration, and significant resistance to both lateral and downward forces both during and after the osseointegration period.

Spaced indents may be provided in the outer surface of the annular rim for restricting rotation of the embedded implant. The first part may have a central bore in an upper face of the disc-shaped member.

The second part preferably comprises a shaft portion for engagement in the central bore of the implant member and a solid head portion projecting upwardly from the shaft portion. The bore (32) may have an upper threaded portion and a non-threaded, lower extension portion, the second part having a shaft portion with a corresponding threaded upper portion and non-threaded lower portion for mating engagement in said implant member bore.

The implant member bore and rest factor shaft portion may have upper ends having matching tapers.

The central spigot preferably has a length in the range from 1-2mm.

The maximum diameter of implant member is limited by the width of the patient's alveolar ridge at the implant site. Accordingly, the assembly may include a plurality of implant members in a range of different sizes, the members having outer diameters in the range from about 4 mm to 6mm.

The implant member diameter is preferably selected to be 1mm less than the available alveolar ridge or bone width at the implant site.

Since the implant member is of relatively large diameter, it has a relatively large surface area resisting downward forces.

The assembly preferably includes a plurality of implant members in a range of different heights from 2-4.5mm.

The head portion is preferably generally cylindrical with an upper, slightly convex rest surface.

In a preferred embodiment, the first part has a height of 2mm and the rim projects 1mm below the undersurface of the disc-shaped member.

Since the rest factor is not anchored to the prosthesis, the risk of jawbone erosion or damage as a result of upward forces is reduced. However, the rest factor does accept down pressure as a result of biting pressure of the denture, and will thus reduce the risk of trauma to the tissue and jawbone erosion as a result of pressure. The localized contact between the rest factor and the underlying bone via the implant member reduces or substantially eliminates pressure trauma on the entire bone.

Since the implant member is relatively short with a relatively large diameter, it can be anchored securely in the jawbone without needing a deep bore to be drilled out. The preferred implant will be shorter and wider then conventional cylindrical implants, and thus can be used at the back or posterior mandible of the jaw where the nerve position prevents or restricts the use of long implants. The implant in accordance with the invention is particularly suitable for positioning a rest factor in the second molar area in conjunction with implant dentistry where cantilevered bridges or anterior implants need support or in other places where a rest factor is needed in dentistry. The implant requires less bone to be drilled out than conventional cylindrical implants, reducing or minimizing bone loss, and is able to accept hundreds of pounds of down pressure from an overlying denture or prosthesis.

### BRIEF DESCRIPTION OF THE DRAWINGS

The present invention will be better understood from the following detailed description of some preferred embodiments of the invention, taken in conjunction with the accompanying drawings, in which like reference numerals refer to like parts, and in which:
Figure 1 is a perspective view of the separated implant and healing screw components of an implant assembly according to a first embodiment of the invention;
Figure 2 is a perspective view of a rest factor of the implant assembly;
Figure 3 is a sectional view of the implant taken on line 3-3 of Figure 1;
Figure 4A is a perspective view of a preferred embodiment of the implant locating tool;
Figure 4B is a perspective view of a healing screw removal tool;
Figure 5 is a sectional view through a typical jawbone with a finished implant in place and a rest factor inserted;
Figure 6 is a jawbone section illustrating the initial drilling set up for an implant;
Figure 7 is a similar view illustrating the final counterboring operation for an implant;
Figure 8 is a similar view with an implant and healing screw in place and enclosed under tissue for the osseointegration period;
Figure 9 illustrates the locating of the integrated implant under the issue;
Figure 10 illustrates the cutting out of a tissue plug overlying the healing screw;
Figure 11 illustrates the removal of the healing screw;
FIGURE 12 illustrates the lower half of a patient's jaw with a full denture anchored in place and seated on rest factors in posterior areas on both sides;
FIGURE 13 is a side view of the denture arrangement of Figure 12;
FIGURE 14 is a perspective view of the separated implant and healing screw components of an implant assembly according to a second embodiment of the invention;
FIGURE 15 is a jawbone section illustrating the initial drilling set up for the implant of Figure 14;
FIGURE 16 is a similar view to Figure 15 illustrating the next step in the drilling procedure;
FIGURE 17 is a similar view illustrating the finishing step in the boring operation; and
FIGURE 18 is a similar view illustrating the implant and healing screw in place and enclosed under tissue for the osseointegration period.

### DESCRIPTION OF THE PREFERRED EMBODIMENT

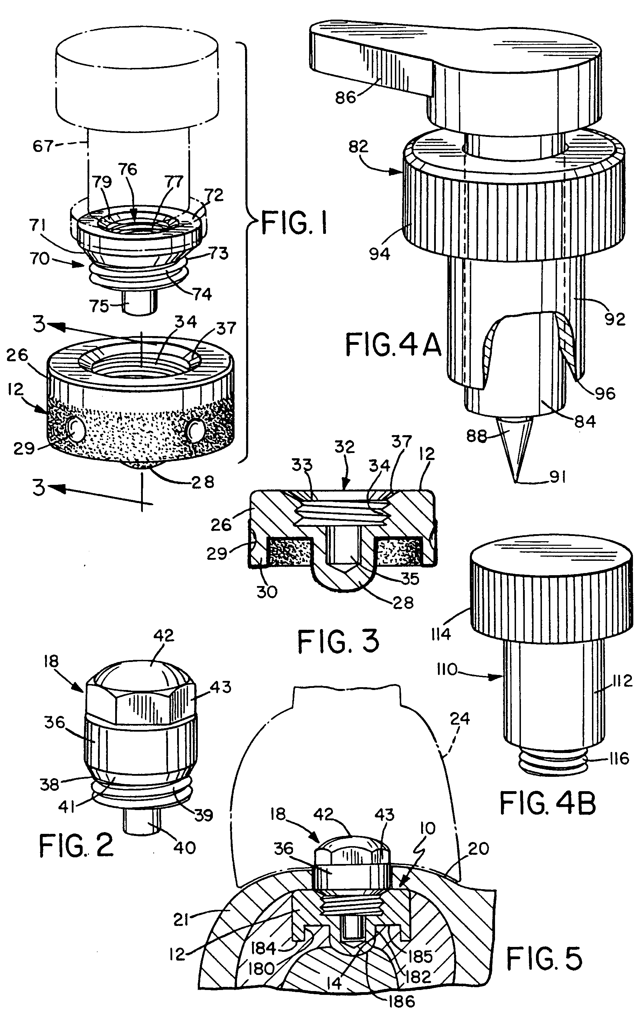

Figures 1 to 3 and 5 of the drawings illustrate an implant assembly 10 according to a first embodiment of the present invention, as well as a method of installing the assembly in the jaw. As best illustrated in Figure 5, the implant assembly 10 basically comprises an implant 12 for insertion into a suitably prepared bore 14 in the jawbone 16, where it is secured in place by osseointegration as is known in the field of implant dentistry, and an extension member or rest factor 18 secured to the implant 12 and extending up to slightly above the level 20 of the tissue or gum 21 to form a rest surface 42 for an overlying denture or bridge 24 which is anchored elsewhere in the jaw.

As best illustrated in Figures 1 and 3, implant 12 comprises a thin, annular member or disc 26 having a central spigot or downward extension 28 projecting from one of its faces and an annular peripheral rim 30 projecting from the same face. A central bore 32 extends from the opposite face into the spigot 28, as illustrated in Figure 4. The bore 32 has a larger diameter upper portion 33 having internal screw threads 34 extending along its length with a taper 37 at its upper end for added strength to hold the threaded engagement. The lower end of bore 32 comprises a smaller diameter lower portion 35 extending into spigot 28 for centering parts mating with implant 12 and preventing cross-threading of the threaded engagement. The implant will be of metal or any suitably rigid material as is normally used for dental implants, for example surgical titanium alloy. The implant preferably has spaced indents 29 on its outer surface for resisting rotation.

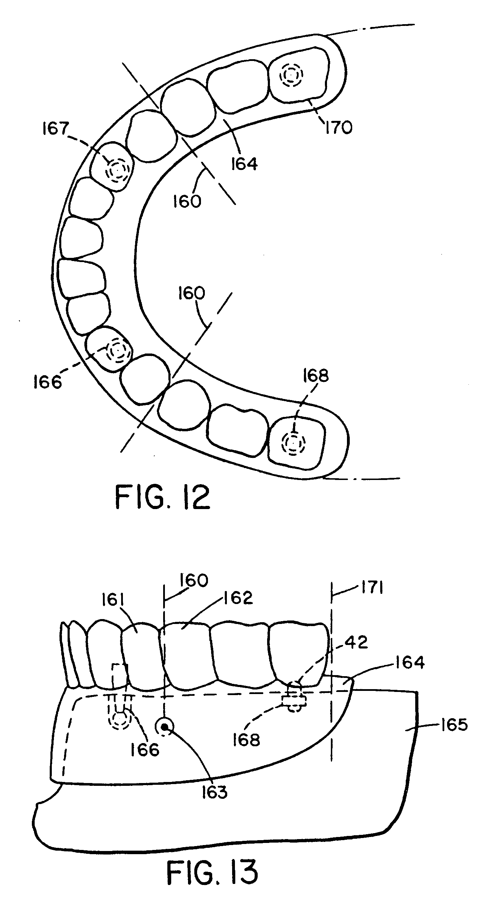

Also illustrated in Figure 1 is a healing screw 70 for insertion in the implant member during the osseointegration process. Healing screw 70 has a relatively short head portion 72 and downwardly depending shaft portion 73 for engagement in the bore 32 of implant 12. Portion 73 has a screw threaded larger diameter upper part 74 for threaded engagement in bore portion 33, the upper part 74 having a taper 71 at its upper end matching the taper 37 at the upper end of the implant bore 32 for support and seating of the screw 70 in bore 32. The lower end of portion 73 comprises a smaller diameter, cylindrical lower part 75 for fitting into lower portion 35. The upper end face of the head portion has a central, tool receiving bore 76 for receiving the end of a suitable tool for inserting the arrangement in the bore in the jawbone, and for subsequently receiving the end of a locating or removing tool as will be explained in more detail below. If desired, the upper end face of screw 70 may have a concave or dish-shaped depression 79 surrounding bore 76. The bore 76 is best illustrated in Figure 11 and includes a screw threaded upper portion 77 and a downwardly depending cylindrical centering extension 78. The threads in upper portion 77 are of opposite hand to those of screw threaded portion 74. In the embodiment illustrated in the drawings, portion 74 has a right hand thread while portion 77 has a left hand thread. The healing screw may be provided in a range of sizes, but in each case the height of the head portion is of the order of 1 mm or less.

The extension or rest factor member 18 as it appears prior to installation in the jaw is illustrated in Figure 2. The member comprises a generally cylindrical boss 36 having a projecting shaft 38 at one end dimensioned for mating engagement in the bore 32 of implant 12. Shaft 38 has an upper, larger diameter portion 39 having external screw threads for threaded engagement with the internal screw threads 34 in the upper part 33 of bore 32, and a lower, smaller diameter cylindrical extension 40 for fitting into the lower part 35 of bore 32, as illustrated in Figure 11. The upper end of shaft 38 has a taper 41 matching the taper 37 at the upper end of the implant bore 32. Member 18 has a curved, slightly convex rest or support surface 42 at its upper end, and an external hex formation 43 for securing it to a suitable tool for insertion into the implant. The member 18 will also be of a suitable dental material such as titanium alloy. Preferably, surface 42 has a relatively small curvature of 10 degrees or less.

Member 18 may alternatively be formed with a concave support surface (not illustrated), or with any suitably shaped upper rest or support surface. Member 18 will be made in a range of heights to allow the dentist to select the appropriate size rest factor for a particular patient's tissue level. The rest factor is selected to project to a distance of no more than 1/2 to 1 mm above the tissue level when installed in the jaw, and is preferably kept as low as possible so that it acts to accept biting pressures but will not interfere with normal jaw motions.

The implant assembly with the rest surface 42 is used to form a rest or support surface in implant dentistry for a prosthesis anchored elsewhere in the jaw, for example, as illustrated in Figures 12 and 13. The implant assembly is designed to be very short or thin so that it can be installed in distal jaw regions to the rear of line 160 in Figures 12 and 13, which extends between the first and second bicuspids 161 and 162 and corresponds to the approximate location where the mandibular nerve 163 exits the jawbone. The mandibular nerve extends through the jawbone to the rear of the first bicuspid, making the installation of long implants in this region difficult or impossible without the assistance of a dental surgeon. This problem becomes even more pronounced in patients whose jawbone has already eroded to some extent due to denture wear. Thus, unsecured dentures are common, resulting in bone erosion from biting impacts. This rest factor assembly avoids or reduces such problems. The implant has a relatively large diameter as compared to its height, providing good implant to bone contact and integration, while having only a short penetration into the jawbone. In the preferred embodiment illustrated, the penetration into jawbone is only between 2 to 4.5 mm, depending on the patient's available bone depth, and there is thus little or no risk of interference with the mandibular nerve.

Figures 12 and 13 illustrate the assembly implanted in the jaw for cooperation with an overlying denture anchored elsewhere. In Figures 12 and 13, a full denture or prosthesis 164 is illustrated, secured to a patient's lower jaw 165 via a pair of anchors 166,167 mounted in the anterior regions of the patient's jaw, and seated on implanted rest factors 168,170 in the posterior or distal jaw region below the former second molar at each end of the denture. In practice, the rest factor assembly may be installed anywhere between the region corresponding to the former second molar (line 171) and the first bicuspid (line 160). The area to the rear of the line 171 has too many muscles for insertion of an implant. As illustrated in Figure 13, the rest factors may be provided or preformed with a slightly convex or curved head 42 which projects slightly (around 1/2 to 1 mm) above the tissue level, although support surfaces of a different shape may be provided. The prosthesis or denture is preferably provided with a corresponding concave surface or depression for seating on the opposing rest factors or surfaces 168 and 170.

Most typical denture anchors allow a limited degree of pivoting or side-to-side motions of the denture with jaw motions so as to reduce stress in the jaw bone areas to which the denture is positively anchored. With relatively long partial or full dentures which extend into the posterior jaw regions, tilting or rotation of the denture about the anchor points with jaw or biting motions will apply pressure or biting force to the underlying tissue and jawbone, causing discomfort and trauma to the underlying bone and tissue, and ultimately resulting in significant bone erosion. The rest surface or surfaces avoid or reduce this problem by accepting down or biting pressure from the denture. Since the rest surfaces are not positively anchored to the denture, they will not be pulled up or from side to side as a result of jaw motions, and will therefore be less likely to cause bone erosion or damage. Additionally, the implant assembly undersurface has a relatively large surface area to resist downward forces and is shaped to resist side movement. The implant assembly is therefore intended to be used at appropriate locations in the jaw which would otherwise be subject to considerable down pressure and potential trauma from an implant such as a full or partial denture or cantilevered bridge. The rest factor surface will be shaped to ensure that it can accept down pressure from an overlying denture in various possible orientations, whatever the angle of the patient's jaw. The support surface prevents excessive force on the tissue, and thus protects the gum tissue from impacting forces which could cause soreness and trauma. Additionally, the rest or support surface prevents or reduces bone erosion by providing support to the distal end of the denture and resisting biting forces.

The implant assembly is designed for implantation at any position in the jaw where a rest factor or surface for a full or partial denture or bridge is needed. Normally, this will be in the posterior jaw, for example in between the first bicuspid and the second molar area, as illustrated in Figures 12 and 13, but a rest surface may also be advantageous in other areas. The dimensions of the assembly 10 are selected according to the dimensions of the jaw in the area where the implant is to be used. A range of implant assemblies of different dimensions may be provided for fitting patients having different jaw dimensions. The implant member is designed to provide sufficient anchoring area with the jawbone when embedded in the jaw, while not extending too deeply into the jaw where it might otherwise interfere with the nerve. Thus, it is short and relatively wide. The implant member has a relatively large diameter, larger than typical straight cylindrical implants, but is shorter in length than such implants, preferably having an overall length in the range from 2 mm to 4.5 mm. In one specific example, several different size implants were provided with annular members of 4.25mm, 5mm, and 6mm outer diameter, respectively. The rest factor may have a diameter of 4mm. The extension or spigot 28 may also be provided in different sizes according to the position in the jaw where it is to be embedded. Central spigots of length between 1 mm and 3 mm may be provided. Also, the central spigot may be omitted in some cases where very little depth is available in the jawbone for embedding the implant. In this case, the rest factor 18 will also have no projection 40. Rest factors having heads in a range of different sizes are also provided, for example, 3 mm, 4 mm and 5 mm. Generally, the overall implant assembly is very short, extending only from 2 to 4.5 mm into the jawbone, while the implant is shaped to have a relatively large bone to implant contact area, as best illustrated in Figure 5.

As can be seen in Figure 5, after osseointegration has taken place, there will be a relatively large area of bone to implant integration even though the penetration into the jaw bone is very short. The shape of the underside of the implant will act to provide stability during the osseointegration process, and a strong bone to implant bond resisting lateral and downward forces throughout the lifetime of the implant. The peripheral rim 30 acts to resist sideways movements due to its inner and outer circumferential surfaces 180, while the lower surfaces 184,185,186 of the outer rim 30, upper face, and boss 28 resist vertical, downward forces. The surfaces combine to provide maximum rest factor to bone contact with a relatively short distance of penetration into the jawbone. The indents 29 in the outer surface will resist rotational movements of the implant. Thus, the implant surfaces resist lateral and vertical movements during osseointegration, and the implant effectively becomes fully integrated with the bone.

This implant is sufficiently short to be safely inserted even where some bone erosion has already taken place, with the appropriate height implant member and rest factor being selected according to the bone depth and tissue height of the particular patient.

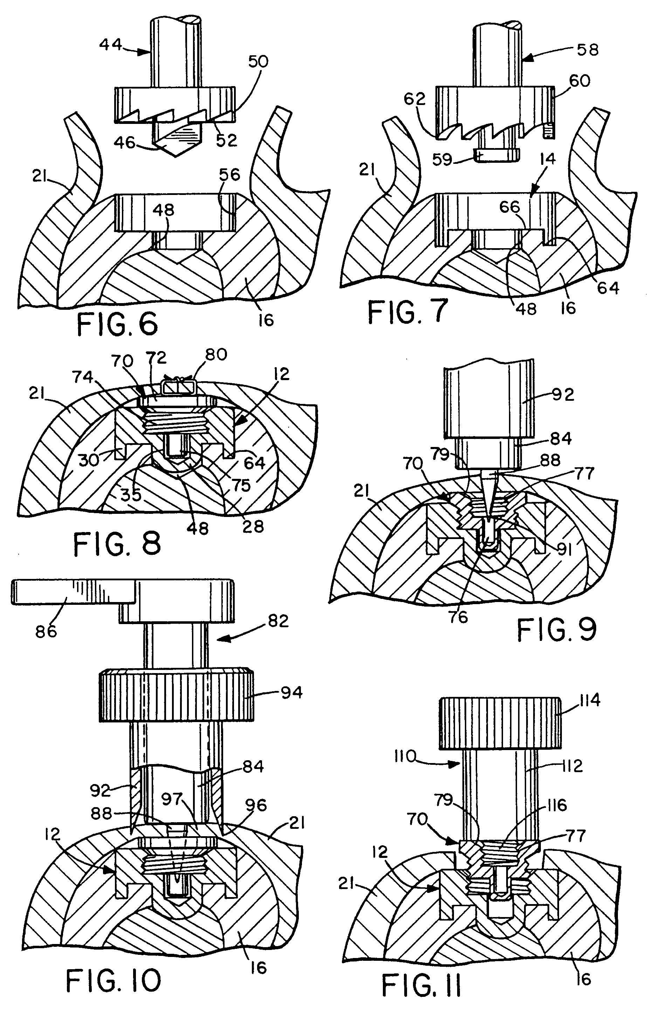

The method of inserting the implant 12 in the jaw will now be described with reference to Figures 6 to 11 of the drawings. This can easily be done by a dentist or dental surgeon. First, a bore shaped to correspond to the shape of member 12 must be cut out. This is done using a series of special cutting burrs. A first water cooled burr or cutter (not illustrated in the drawings) is used to drill a cylindrical guide hole or pilot dimple at the center of a selected site, for example under the second molar area or at the distal end of a cantilevered bridge. The width of the alveolar crest with equal distance on both sides of the pilot dimple is then measured. The largest diameter rest factor implant which will fit within the available width while allowing at least 1/2 mm of bone on each side of the implant is selected. An internally irrigated implant body drill 44 of diameter matching that of the selected rest factor implant is then selected. Burr 44, illustrated in Figure 6, has a smaller diameter pilot drill 46 for cutting out a cylindrical bore 48 and a larger diameter portion 50 having an end cutter 52 for drilling out the larger diameter upper end 56 of the bore. The cylindrical portion 50 may be provided with suitable markings or a scale (not shown) so that the dentist can control the depth the drilled bore. However, in the preferred version, the height of portion 50 matches the height of implant member 12. The length of the pilot drill 46 will correspond to the length of spigot 28 of the implant, so that spigot 28 will fit in bore portion 48. The dentist determines the optimum angle and drills in to the bone to a point where the larger diameter portion 50 ends.

Figure 7 illustrates the operation of a water cooled guided core drill or burr 58 having a central guide or pilot tip 59 for fitting in the previously drilled bore portion 48 to center the tool on the bore. The tool has a cylindrical central body portion 60 having a downwardly facing annular ring of cutting teeth 62 for drilling out an annular groove or channel 64 around the periphery of the flat or shoulder 66 separating counter bore 56 from the smaller diameter bore portion 48. The length of the teeth controls the depth of groove 64, and will be equivalent to the height of the downwardly depending rim 30 of the implant to be received in the bore. Once the lower face of body portion 60 hits the flat 66, drilling is stopped.

All three cutting tools may be provided with a cage for collecting bone as it is drilled out of the bore. The collected bone may be used for filling any edges or spaces left after insertion of the implant.

After the bore for receiving the implant 12 has been prepared as described above, and debris has been cleaned out in the standard manner, for example by irrigating the site with sterile water or sterile saline, the implant 12 can be inserted. The healing screw 70 is initially secured to the implant.

Prior to insertion in the previously prepared bore, the internal faces of the implant will be coated with a suitable bonding agent, such as hydroxyl apatite. These faces may be roughened as illustrated in Figures 1 and 3 to increase the bonding area and strengthen the adhesion in the bore 14. A suitable plastic insertion tool 67 (See Figure 1) having a handle and a gripping end for snap engagement over the head of the healing screw is then used to insert the implant and attached healing screw in the bore. The bore is drilled out to a depth such that the upper end of the implant 12 will be at the bone level when fully inserted, as indicated in Figure 8, or slightly below that level if desired. For convenience, the insertion tool is preferably a disposable, snap-off plastic member which is supplied in a sealed, sterile package together with the healing screw and implant, the three parts being supplied secured together in the package for easy handling. The insertion tool can be snapped off after the parts have been positioned in the bore.

The tissue or gum 21 is then secured over the implant and healing screw with conventional flap sutures 80. Since the head portion of the healing screw projecting above the implant member is relatively short, little or no bulge will be apparent when the tissue is sewn up. The site is left to heal for several months to allow the implant to osseointegrate, or bond with the surrounding bone. The shape of the implant member is designed for maximum stability in resisting movement during the osseointegration period, due to its relatively large diameter and the peripheral rim 30 as well as spigot 28. These also combine to provide a relatively large bone to implant bonding area after osseointegration. After the integration period, a special locating tool 82, best illustrated in Figures 4A, 9 and 10, is used to locate the implant.

The retrieval tool 82 comprises a central shaft 84 with a head or gripping handle 86 at one end. Handle 86 projects to one side of the shaft as indicated. A projecting probe 88 at the opposite end is designed for engagement in the bore 76 of healing screw. The probe has a sharp pointed end 91. A cutter sleeve or tissue punch 92 is slidably mounted on shaft 84. Cutter sleeve 92 has a projecting annular handle or gripping portion 94 and a lower cutting edge 96.

The use of the retrieval tool 82 to locate the implant site will now be explained, with reference to Figures 1 and 9. The approximate area of the implant is first located, utilizing radiographic charts and finger palpations. The pointed end 91 of the probe is then used to pierce the tissue 21 at the approximate site of the implant, and is then used as a probe to locate the upper face of the healing screw. Once the screw has been found, the concave recess (if provided) will act as a guide to direct the pointed end to the retrieval hole or bore 76 at the center of the healing screw, as illustrated in Figure 9, centering the tool on the implant site.

Once the probe has entered bore 76, as illustrated in Figure 9, the handle 86 of the locating tool is held firmly in one hand to support the tool upright and the tissue punch is turned in a circular motion while pushing it down along the locating tool with a firm pressure. The tissue punch is designed to cut out a plug 97 of tissue directly over the implant. The punch will be stopped when it engages the outer diameter of the healing screw. The locating retrieval tool 82 is then removed together with the tissue punch, simultaneously pulling out the plug of tissue. If the tissue plug does not pull out, it may be removed with forceps.

A separate healing screw removal tool 110 is then used to remove the exposed healing screw. Tool 110 is illustrated in Figure 4B and 11, and comprises a shaft portion 112 with a head or gripping portion 114 at one end and a threaded portion 116 at the opposite end for threaded engagement in the threaded, upper end portion 77 of bore 76 of the healing screw. The threaded end 116 is threaded counter-clockwise into the healing screw, tightening the tool inside the healing screw and at the same time unscrewing the healing screw from the implant as illustrated in Figure 11. The implant is thus exposed for secondary healing or restoration procedures.

This technique for exposing or recovery of an embedded implant after healing and osseointegration has taken place removes only a small plug of tissue from immediately above the implant site, avoiding the need to cut out an enlarged flap of the tissue both to locate the implant and to expose the healing screw for removal. Little or no suturing will be required. Thus, considerably less trauma to the tissue is involved, reducing the healing time and the risk of infection. Also, the healing screw is located and the tissue plug may be removed simultaneously with one tool, simplifying the procedure and reducing the time involved.

Although in the preferred embodiment described above, the upper end of the retrieval bore 76 in the upper face of the healing screw is screw threaded, it may alternatively be hexagonal with the retrieval tool having a corresponding hexagonal portion for mating engagement in the bore.

As an additional aid in locating the embedded implant, a thread or wire may be left projecting from the healing screw through the suture area, so that the location may be found easily after healing. Alternatively, the tissue overlying the implant may be marked with a suitable dye. However, it is expected that such markers will not normally be required, the dentist locating the general implant site by feel before piercing the tissue with the probe.

The same implant recovery tools may be used for any selected implant size, since the dimensions of bore 76 in the healing screw will be identical.

Once the healing screw has been removed and the exposed surface of the implant suitably cleaned and prepared, the appropriate rest factor 18 is inserted into the implant. The rest factor 18, in addition to providing a rest surface, also acts as a secondary tissue healing insert. The rest factor is selected with a head height so that it will project just above the patient's tissue level when installed. The shaft 38 of rest factor 18 is screwed into bore 32 of implant 12, as indicated in Figure 5, with the mating surfaces first being coated with a suitable bonding agent.

Although the rest factor in the preferred embodiment has a head portion preformed in a range of heights, it may alternatively be provided with a longer extension piece which projects above the tissue level 20 when the member 18 is fully inserted. In this case, the dentist marks around the periphery of the selected member 18 at the tissue height, and removes the member from the implant. A suitable temporary cover or crown of a standard nature may be fitted into implant 12 at this point.

The dentist then mounts the member 18 in a previously prepared cast of the patient's jaw, and machines or cuts away the upper face of member 18 to provide the desired rest surface 22 at the tissue level 20, as determined by the markings made while the member was mounted in the patient's jaw. The cut away surface may be slanted or inclined according to the angle of the patient's tissue or gum. This allows the height to be customized for minimal side torque. The shape of the rest surface 22 may be of the dentists choice. For example, it may be concave, while the denture or prosthesis with which it is to cooperate has a corresponding convex area or bump 95 for fitting into the concave depression on the rest surface, so that the rest factor or member 18 accepts down pressure from the denture without any retention. However, in the preferred embodiment, members 18 with ready-made ball-shaped or other shape heads of various sizes in a range of tissue heights are provided to avoid the need for machining on site by the dentist.

This procedure may be utilized to implant one or more rest factors at any suitable location in the jaw, depending on the denture pressure points, for example as illustrated in Figures 12 and 13.

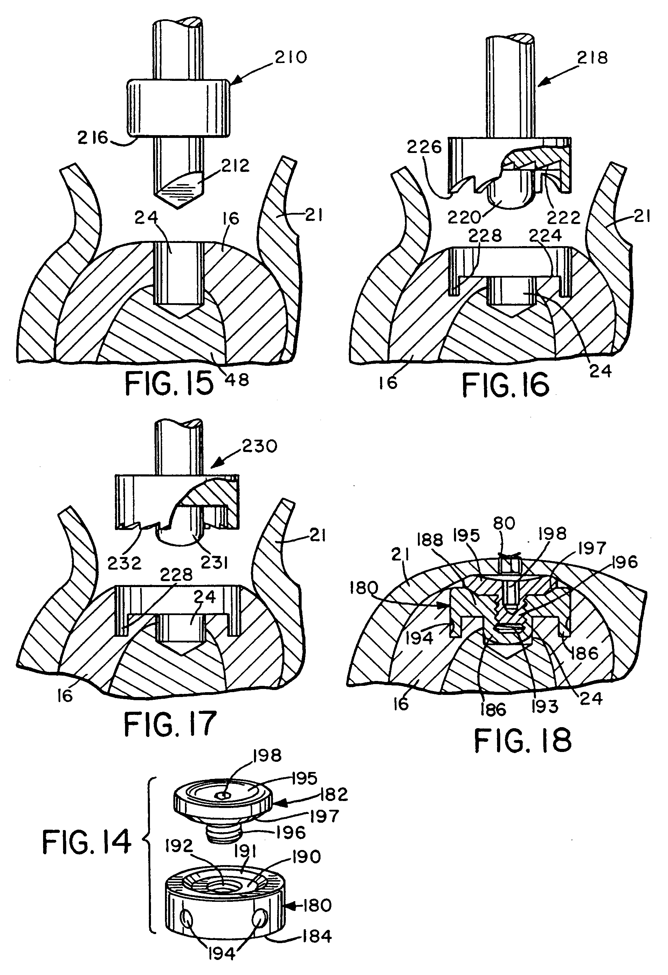

Figure 14 of the drawings illustrates an alternative embodiment of the implant assembly which is much thinner than that of Figures 1 to 3 and 5 and which will therefore project only a minimal distance into the jawbone, further reducing the risk of interference with the nerve. This implant assembly is useful for providing a rest surface at a desired location in any patient's jaw, whether or not previous bone erosion is a factor, but is particularly useful in patients having significant bone erosion where very little depth is available for implants.

Figure 14 illustrates an implant member 180 and healing screw 182 of an implant assembly according to a second, modified embodiment of the invention. Figure 18 illustrates the implant member 180 and healing screw 182 of Figure 14 implanted in the jawbone during the osseointegration process, while Figures 15 to 17 illustrate a modified method of forming a bore in the jawbone for receiving the implant.

As illustrated in Figures 14 and 18, implant member 180 is a flat disc-like member having an undersurface of similar shape to the undersurface of member 12 in the first embodiment. However, the peripheral rim 184 and central spigot 186 are approximately the same length in this embodiment, so that the spigot 186 does not project downwardly below the lower end of rim 184. Preferably, member 180 has a total height of around 2mm while its peripheral rim 184 projects around 1 mm below the undersurface of disc part 188. The member 180 is provided in a range of diameters, preferably 4.25 mm, 5 mm and 6 mm, for patients having varying alveolar ridge widths. As in the first embodiment, the maximum diameter possible implant member is selected for the patient dependent on the available space, i.e., the alveolar ridge width. The rim 184 is relatively thin, and in one particular example had a thickness of the order of 0.4 mm.

The member 180 has a recess 190 in its upper surface with a taper 191 extending around the outer periphery of the recess. A central, straight cylindrical bore 192 extends from the center of recessed area 190 into the spigot 186, and bore 192 has screw threads 193 extending along its length. Member 180 is made of the same material as the implant 12 of the first embodiment. As in the first embodiment, circular or rounded indents 194 are provided on the outer surface of member 180 to resist rotational movement after implantation. Between 6 and 8 equally spaced indents may be provided, for example.

Healing screw 182 has a relatively short head portion 195 and a downwardly depending, screw threaded shaft portion 196 for mating engagement in the bore 192 of implant member 180, as illustrated in Figure 18. The undersurface of head portion 195 seats in recessed area 190 and has a tapered annular surface portion 197 for seating on taper 191 around the recessed area 190, for accurate seating of the screw in bore 192. The upper surface of head 195 has a central, tool receiving bore 198 for receiving the end of a suitable tool for inserting the arrangement in a previously prepared bore in the jawbone, and also for receiving the end of locating tool 82 as described above in connection with the first embodiment of the invention. Bore 198 is of hexagonal cross section, and is designed to be removed by a suitable removal tool having a hexagonal end after location by tool 82.

The rest factor or member of the second embodiment is not illustrated in the drawings but will be similar or equivalent to rest factor 36 as illustrated in Figures 2 and 5 of the drawings apart from its lower surface and downwardly depending shaft portion, which will be identical to lower surface and shaft portion of the healing screw 182 for mating engagement in the bore 192 in implant member 180 after osseointegration is complete.

The modified method of inserting insert member 180 in the jaw will now be described with reference to Figures 15 to 17 of the drawings. This procedure can easily be carried out by a dentist, although a dental surgeon may also perform the procedure if desired. After the tissue overlying the implant site has been cut, a pilot dimple is formed at the center of the selected site. The width of the alveolar crest or ridge at the implant site is measured, and the largest possible diameter implant which will fit within the available width while leaving at least 1/2 mm of bone on each side is selected.

A bore matching the selected implant dimensions is then accurately drilled out using a series of three internally irrigated drilling burrs. The first burr 210 has a straight pilot drill 212 for drilling out a cylindrical bore 214 to a desired depth at the implant site, as determined by stop 216, as illustrated in Figure 15. Preferably, bore 214 will be slightly longer than the implant member, for example 3mm. A second burr 218 is designed to cut out the desired bore shape to match the shape of the undersurface of implant member 180, as illustrated in Figure 16. Burr 218 has a central, non-cutting guide or spigot 220 for fitting into previously drilled bore 214 for centering purposes, a first cutting surface 222 for cutting down to the level of flat 224, and an annular, downwardly projecting rim of cutting teeth 226 for cutting out part of annular recess 228 for receiving the annular rim 184 of the implant member. Preferably, teeth 226 are designed to cut recess 228 to a depth of 1/2 mm. The final burr 230 is illustrated in Figure 17 and is designed to finish and smooth the surfaces of recess 228. Burr 230 also has a central guide 231 and an annular rim of finer cutting teeth 232 which cut the final 1/2 mm of the recess to a total depth of around 1 mm, and which smooth and finish the cut surfaces.

The finished bore of Figure 17 is cut to very precise dimensions by the series of cutting drills so that the implant member can be accurately seated in the bore as illustrated in Figure 18 after suitable treatment of the surfaces and application of bonding agents. The gap below spigot 186 does not affect the integration process and will soon fill in with bone. The accurate, close fitting of peripheral rim 184 into recess 228 provides great stability and resistance against any sideways movement during the three month or more osseointegration period, so that a good bone to implant bond can be produced in spite of the minimal length of the implant.

After osseointegration is complete, the site is located and the healing screw 182 exposed and removed as described above in connection with the first embodiment of the invention. The rest factor (not illustrated) is inserted into the implant member as described in connection with the previous embodiment.

In both of the embodiments described above, the shape of the undersurface of the implant ensures that there will be little or no side sway either during or after the osseointegration period. This results from the downwardly projecting peripheral rim, having inner and outer circumferential surfaces which combine to resist any sideways forces. This resistance to sidesway is enhanced by the spigot 186 which also acts to resist sideways movement. The relatively large diameter of the implant provides a large area of downwardly facing surfaces which together resist downward forces on the implant assembly, further increasing the stability of the implant and acting to absorb biting pressures. The implant is selected to be of the maximum possible diameter according to the bone width available for implantation in a particular patient. The indents 29,194 will act to resist rotational movements during and after osseointegration. The combined effect of the shape of the undersurface of the implant and its relatively large surface area is to produce a very stable implant with minimal penetration into the bone.

Although the implant member is illustrated as implanted so that its upper surface is at the bone level, it may be implanted to a lesser depth if the patient has a large amount of bone erosion or resorption. For example, if there is only 1 mm bone depth available for implantation without fear of interference with the nerve, the implant is simply installed to 1mm in depth so that approximately 1 mm. projects above the bone level. However, it will still have sufficient holding power to remain in position since the undersurface, and particularly the peripheral rim, will position the implant during osseointegration and bond to the surrounding bone to resist sideways and downwards forces. Since it is not anchored to any overlying body, upwards forces do not have to be resisted. Thus, sufficient bonding area is provided to resist any loosening during normal wear.

This implant assembly avoids the problems of implantation in areas to the rear of the second molar since the implantation depth is significantly reduced while still providing sufficient bonding area positioned to provide a stable, fully integrated implant. The rest surface will act to resist the effects of biting pressure from overlying dentures on the jawbone, so that jawbone erosion as the result of such pressure is significantly reduced or eliminated. Additionally, denture comfort will be increased since damage or trauma to the tissue or gum will be reduced.

This implant system may be used in any implant procedure where a denture or prosthesis of more than one tooth is involved, and is particularly useful in posterior areas of the jaw where the implant depth is limited, for example the second molar area, and in conjunction with anterior implants or cantilevered bridges. The implant has a relatively short penetration into the bone, so that it can be installed in regions to the rear of the first bicuspid without fear of interference with the nerve, yet has sufficient anchoring surface area to integrate with the bone and accept down pressure of 91 - 136 kg (two to three hundred pounds) from an overlying denture or prosthesis. Since the implant is not positively anchored to the prosthesis, it does not have to resist Large upward or sideways forces, reducing the risk of bone erosion. At the same time, the rest factor will reduce the trauma to underlying tissue and reduce or eliminate bone erosion from the overlying denture by accepting the downward pressure from the denture.

Although some preferred embodiments of the present invention have been described above by way of example only, it will be understood by those skilled in the field that modifications may be made to the disclosed embodiments without departing from the scope of the invention, which is defined by the appended claims.

## Claims

1. A dental implant assembly comprising:
implant means (10) for embedding in the jawbone (165), the implant means including a first part (12) for projecting into and osseointegrating with the jawbone (165) and a second part (18) for projecting up to just above the tissue level characterized in that:
the implant assembly is for embedding in the distal region of the jawbone (165) to the rear of the first bicuspid (161) and is arranged to support a distal end of the denture (24) anchored elsewhere in the jaw (165);
the first part (12) has a height no greater than 4.5mm; and,
the second part (18) has an upper rest surface (42) having a shaped, cooperating area for non-retentive seating engagement with a correspondingly shaped mating surface on an overlying denture (24) anchored elsewhere in the jaw (165), whereby the second part (18) can resist biting pressure on the tissue and the jaw (165) while allowing lateral movement of the denture (24).

2. The assembly as claimed in claim 1, wherein said first part (12) comprises an implant member (12) and the second part (18) comprises a rest factor (18) releasably securable to the implant member.

3. The assembly as claimed in claim 1, wherein the first part (12) has a height no greater than its diameter.

4. The assembly as claimed in claim 1, wherein the first part (12) has a height of between 2-4.5mm.

5. The assembly as claimed in claim 1, wherein the first part (12) comprises a thin disc-shaped member (26) having a downwardly projecting annular rim (30).

6. The assembly as claimed in claim 5, further including a central spigot (28) projecting downwardly from the disc-shaped member (26).

7. The assembly as claimed in claim 5, including spaced indents (29) in the outer surface of the annular rim (30) for restricting rotation of the embedded implant.

8. The assembly as claimed in claim 5, wherein the first part (12) has a central bore (32) in an upper face of the disc-shaped member (26).

9. The assembly as claimed in claim 8, wherein the second part (18) comprises a shaft portion (38) for engagement in the central bore (32) of the implant member (12) and a solid head portion (36) projecting upwardly from the shaft portion (38).

10. The assembly as claimed in claim 8, wherein the bore (32) has an upper threaded portion (34) and a non-threaded, lower extension portion (35), the second part (18) having a shaft portion (38) with a corresponding threaded upper portion (39) and non-threaded lower portion (40) for mating engagement in said implant member bore (32).

11. The assembly as claimed in claim 10, wherein said implant member bore (32) and rest factor shaft portion (38) have upper ends (37,41) having matching tapers.

12. The assembly as claimed in claim 6, wherein the central spigot (28) has a length in the range from 1 to 2mm.

13. The assembly as claimed in claim 2, including a plurality of implant members (12) in a range of different sizes, the members (12) having outer diameters in the range from about 4.25 to 6mm.

14. The assembly as claimed in claim 2, including a plurality of implant members (12) in a range of different heights from 2 to 4.5mm.

15. The assembly as claimed in claim 9, wherein the head portion (36) is generally cylindrical with an upper, slightly convex rest surface (42).

16. The assembly as claimed in claim 5, wherein the first part (12) has a height of 2mm and the rim (30) projects 1mm below the undersurface of the disc-shaped member (26).

## Patentansprüche

1. Zahnimplantataufbau, der folgendes umfaßt;
ein Implantatmittel (10) zur Einbettung in den Kieferknochen (165), wobei das Implantatmittel ein erstes Teil (12), das in den Kieferknochen hineinragt und damit integriert wird, und ein zweites Teil (18), das bis gerade über der Gewebehöhe nach oben ragt, enthält, dadurch gekennzeichnet, daß:
der Implantataufbau zur Einbettung in den distalen Bereich des Kieferknochens (165) bis hinter dem ersten Bikuspidat bestimmt und zum Tragen eines distalen Endes des woanders im Kiefer (165) verankerten Zahnersatzes (24) angeordnet ist;
die Höhe des ersten Teile (12) nicht mehr als 4,5 mm beträgt; und
daß die obere Auflagefläche (42) des zweiten Teils (18) einen Bereich aufweist, der zum nicht-festhaltenden Auflageeingriff mit einer entsprechend geformten, damit zusammenpassenden Fläche eines darüber liegenden Zahnersatzes (24), der woanders im Kiefer (165) verankert ist, geformt ist und damit zusammenwirkt, wodurch das zweite Teil (18) Kaudruck auf das Gewebe und den Kiefer (165) entgegenwirken kann, während es eine Querbewegung des Zahnersatzes (24) gestattet.

2. Aufbau nach Anspruch 1, bei dem das erste Teil (12) ein Implantatglied (12) und das zweite Teil (18) einen Auflagefaktor (18), der am Implantatglied lösbar befestigt werden kann, umfaßt.

3. Aufbau nach Anspruch 1, bei dem das erste Teil (12) eine Höhe hat, die nicht größer als sein Durchmesser ist.

4. Aufbau nach Anspruch 1, bei dem die Höhe des ersten Teils (12) zwischen 2 - 4,5 mm beträgt.

5. Aufbau nach Anspruch 1, bei dem das erste Teil (12) ein dünnes scheibenförmiges Glied (26) mit einem nach unten ragenden ringförmigen Rand (30) aufweist.

6. Aufbau nach Anspruch 5, der weiterhin einen vom scheibenförmigen Glied (26) nach unten ragenden mittleren Zapfen (28) enthält.

7. Aufbau nach Anspruch 5, der in der Außenfläche des ringförmigen Rands (30) beabstandete Einschnitte (29) enthält, um Drehung des eingebetteten Implantats zu begrenzen.

8. Aufbau nach Anspruch 5, bei dem das erste Teil (12) in einer oberen Fläche des scheibenförmigen Glieds (26) eine mittlere Bohrung (32) aufweist.

9. Aufbau nach Anspruch 8, bei dem das zweite Teil (18) einen Schaftteil (38) zum Eingriff in die mittlere Bohrung (32) des Implantatglieds (12) und einen massiven Kopfteil (36), der vom Schaftteil (38) nach oben ragt, umfaßt.

10. Aufbau nach Anspruch 8, bei dem die Bohrung (32) einen oberen Gewindeteil (34) und einen unteren Verlängerungsteil (35) ohne Gewinde aufweist, wobei das zweite Teil (18) einen Schaftteil (38) mit einem entsprechenden oberen Gewindeteil (39) und unteren Teil (40) ohne Gewinde zum passenden Eingriff in die Implantatgliedbohrung (32) aufweist.

11. Aufbau nach Anspruch 10, bei dem die Implantatgliedbohrung (32) und der Auflagefaktorschaftteil (38) obere Enden (37, 41) mit zusammenpassenden Konizitäten aufweisen.

12. Aufbau nach Anspruch 6, bei dem die Länge des mittleren Zapfens (28) im Bereich von 1 bis 2 mm liegt.

13. Aufbau nach Anspruch 2, der mehrere Implantatglieder (12) unterschiedlicher Größe enthält, wobei die Außendurchmesser der Glieder (12) im Bereich von ca. 4,25 mm bis 6 mm liegen.

14. Aufbau nach Anspruch 2, der mehrere Implantatglieder (12) unterschiedlicher Höhe von 2 bis 4,5 mm enthält.

15. Aufbau nach Anspruch 9, bei dem der Kopfteil (36) allgemein zylindrisch mit einer oberen leicht konvexen Auflagefläche (42) ist.

16. Aufbau nach Anspruch 5, bei dem das erste Teil (12) 2 mm hoch ist und der Rand (30) 1 mm unter die Unterseite des scheibenförmigen Glieds (26) hinwegragt.

## Revendications

1. Dispositif à implant dentaire comprenant des éléments d'implant (10) destinés à être noyés dans l'os maxillaire (165), lesquels éléments d'implants comprennent une première partie (12) destinée à être engagée dans l'os maxillaire (165) et à subir une intégration osseuse avec ce dernier et une seconde partie (18) destinée à faire saillie jusqu'à juste au-dessus du niveau du tissu, caractérisé en ce que :
le dispositif à implant est destiné à être noyé dans la région distale de l'os maxillaire (165) à l'arrière de la première prémolaire (161) et est agencé de façon à supporter une extrémité distale de la denture (24) ancrée ailleurs dans la mâchoire (165) ;
la première partie (12) présente une hauteur ne dépassant pas 4,5 mm ; et
la seconde partie (18) présente une surface d'appui supérieure (42) comportant une région conformée et coopérant pour venir en prise, sans la retenir, avec une surface appariée, conformée en conséquence, d'une denture (24) placée au-dessus et ancrée ailleurs dans la mâchoire (165) de telle façon que la seconde partie (18) puisse résister à la pression d'occlusion exercée sur le tissu et la mâchoire (165), tout en permettant des mouvements latéraux de la denture (24).

2. Dispositif selon la revendication 1, dans lequel la première partie (12) consiste en un élément formant implant (12) et la seconde partie (18) consiste en un facteur d'appui (18) pouvant être assujetti de manière amovible à l'élément formant implant.

3. Dispositif selon la revendication 1, dans lequel la première partie (12) présente une hauteur ne dépassant pas son diamètre.

4. Dispositif selon la revendication 1, dans lequel la première partie (12) présente une hauteur comprise entre 2 et 4,5 mm.

5. Dispositif selon la revendication 1, dans lequel la première partie (12) comprend un élément mince (26) en forme de disque présentant un bord annulaire (30) faisant saillie vers le bas.

6. Dispositif selon la revendication 5, comprenant en outre une saillie centrale (28) s'étendant vers le bas à partir de l'élément (26) en forme de disque.

7. Dispositif selon la revendication 5, présentant des creux, ou encoches, espacés (29) ménagés dans la surface extérieure du bord annulaire (30) pour restreindre la rotation de l'implant noyé.

8. Dispositif selon la revendication 5, dans lequel la première partie (12) présente un alésage central (32) dans une face supérieure de l'élément (26) en forme de disque.

9. Dispositif selon la revendication 8, dans lequel la seconde partie (18) comprend une portion (38) en forme d'axe destinée à s'engager dans l'alésage central (32) de l'élément formant implant (12), et une portion massive formant tête (36) faisant saillie vers le haut à partir de la portion (38) en forme d'axe.

10. Dispositif selon la revendication 8, dans lequel l'alésage (32) présente une portion supérieure taraudée (34) et une portion de prolongement inférieure non taraudée (35), la seconde partie (18) présentant une portion (38) en forme d'axe avec une portion supérieure filetée correspondante (39) et une portion inférieure non filetée (40) destinées à venir en prise dans l'alésage (32) de l'élément formant implant.

11. Dispositif selon la revendication 10, dans lequel l'alésage (32) de l'élément formant implant et la portion (38) en forme d'axe du facteur d'appui comportent des extrémités supérieures (37 ; 41) présentant des conicités appariées.

12. Dispositif selon la revendication 6, dans lequel la saillie centrale (28) présente une longueur comprise entre 1 et 2 mm.

13. Dispositif selon la revendication 2, comprenant plusieurs éléments formant implants (12) dans une gamme de tailles différentes, les éléments (12) présentant des diamètres extérieurs compris entre environ 4,25 et 6 mm.

14. Dispositif selon la revendication 2, comprenant plusieurs éléments formant implants (12) dans une gamme de hauteurs différentes allant de 2 à 4,5 mm.

15. Dispositif selon la revendication 9, dans lequel la partie formant tête (36) est sensiblement cylindrique avec une surface d'appui supérieure (42) légèrement convexe.

16. Dispositif selon la revendication 5, dans lequel la première partie (12) présente une hauteur de 2 mm et le bord (30) fait saillie de 1 mm au-dessous de la surface inférieure de l'élément (26) en forme de disque.
